# EUROPEAN PATENT SPECIFICATION

(11) **EP 2 984 296 B1**
(45) Date of publication and mention of the grant of the patent: **08.01.2020**
(21) Application number: 14783318.0
(22) Date of filing: 03.04.2014
(51) Int. Cl.: F01D 11/08, F01D 25/24, F02C 7/28

(54) **BLADE OUTER AIR SEAL WITH SECONDARY AIR SEALING**
AUSSENDICHTUNG FÜR EINE TURBINENSCHAUFEL MIT SEKUNDÄRLUFTABDICHTUNG
JOINT ÉTANCHE À L'AIR EXTÉRIEUR DE PALE COMPORTANT UNE ÉTANCHÉITÉ À L'AIR SECONDAIRE

(30) Priority: 12.04.2013 US 201361811169 P
(43) Date of publication of application: 17.02.2016
(73) Proprietor: United Technologies Corporation, Farmington, CT 06032 (US)
(72) Inventor: CLOUSE, Brian Ellis, Saugus, Massachusetts 01906-2501 (US); CLOUD, David F., Simsbury, Connecticut 06070 (US); CLOUGH, Donna, Tolland, Connecticut 06084 (US)
(74) Representative: Dehns
(86) International application number: PCT/US2014/032779
(87) International publication number: WO 2014/168804

(56) References cited:
- WO-A1-98/53228
- WO-A1-2014/105731
- US-A- 4 925 365
- US-A- 5 145 316
- US-A- 5 188 507
- US-A- 5 988 975
- US-A1- 2004 213 666
- US-A1- 2006 083 607
- US-A1- 2012 319 362

## Description

### BACKGROUND

This disclosure relates to a gas turbine engine, and more particularly to a blade outer air seal (BOAS) that may be incorporated into a gas turbine engine.

Gas turbine engines typically include a compressor section, a combustor section and a turbine section. During operation, air is pressurized in the compressor section and is mixed with fuel and burned in the combustor section to generate hot combustion gases. The hot combustion gases are communicated through the turbine section, which extracts energy from the hot combustion gases to power the compressor section and other gas turbine engine loads.

The compressor and turbine sections may include alternating rows of rotating blades and stationary vanes that extend into the core flow path of the gas turbine engine. For example, in the turbine section, turbine blades rotate and extract energy from the hot combustion gases that are communicated along the core flow path of the gas turbine engine. The turbine vanes, which generally do not rotate, guide the airflow and prepare it for the next set of blades.

A casing of an engine static structure may include one or more blade outer air seals (BOAS) that establish a radial flow path boundary of the core flow path. The BOAS are positioned in relative close proximity to a blade tip of each rotating blade in order to seal between the blades and the casing.

US 5,188,507 discloses a prior art gas turbine engine in accordance with the preamble of claim 1. WO 98/53228 discloses a prior art interstage vane seal apparatus. WO-2014/105731 and US-5988975 show further examples of outer air seals.

### SUMMARY

According to a first aspect of the present invention, there is provided a gas turbine engine as set forth in claim 1.

In a non-limiting embodiment of the foregoing gas turbine engine, the seal is attached to the outer lip.

In a further non-limiting embodiment of any of the foregoing gas turbine engines, the seal is a C-seal.

In a further non-limiting embodiment of any of the foregoing gas turbine engines, the seal is expandable between a compressed configuration and an expanded configuration.

In a further non-limiting embodiment of any of the foregoing gas turbine engines, the seal applies a constant load on the retention flange.

In a further non-limiting embodiment of any of the foregoing gas turbine engines, the gas turbine engine further comprises a compressor section, a combustor section in fluid communication with the compressor section and a turbine section in fluid communication with the combustor section. The blade outer air seal (BOAS) is associated with at least one of the compressor section and the turbine section.

According to a further aspect of the present invention, there is provided a method as set forth in claim 7.

In a further non-limiting embodiment of either of the foregoing methods, the seal blocks airflow leakage around the retention flange.

In a further non-limiting embodiment of any of the foregoing methods, the method includes the step of exerting a constant load on an outer lip of the retention flange during the step of biasing.

In a further non-limiting embodiment of any of the foregoing methods, the step of mounting includes inserting a portion of the flange of the casing into a recess defined by the fishmouth body of the retention flange.

The various features and advantages of this disclosure will become apparent to those skilled in the art from the following detailed description. The drawings that accompany the detailed description can be briefly described as follows.

### BRIEF DESCRIPTION OF THE DRAWINGS

Figure 1 illustrates a schematic, cross-sectional view of a gas turbine engine.
Figure 2 illustrates a cross-sectional view of a portion of a gas turbine engine that incorporates a blade outer air seal (BOAS).
Figure 3 illustrates a BOAS that provides secondary air sealing.
Figure 4 illustrates an exemplary seal of a BOAS.

### DETAILED DESCRIPTION

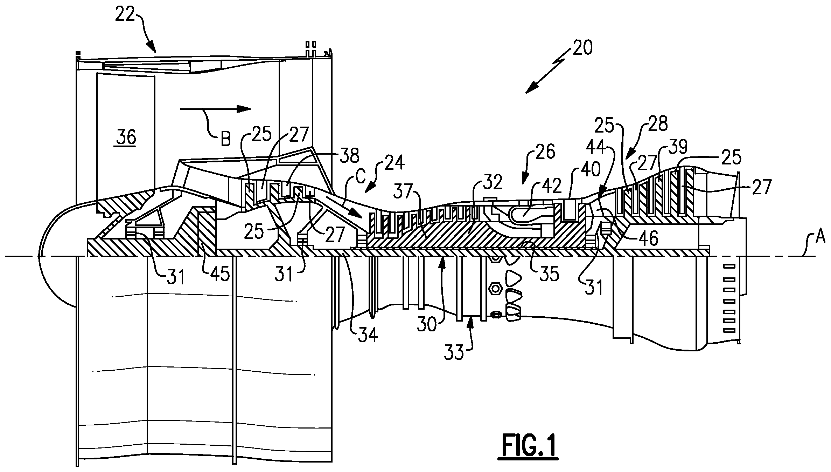

Figure 1 schematically illustrates a gas turbine engine 20. The exemplary gas turbine engine 20 is a two-spool turbofan engine that generally incorporates a fan section 22, a compressor section 24, a combustor section 26 and a turbine section 28. Alternative engines might include an augmenter section (not shown) among other systems for features. The fan section 22 drives air along a bypass flow path B, while the compressor section 24 drives air along a core flow path C for compression and communication into the combustor section 26. The hot combustion gases generated in the combustor section 26 are expanded through the turbine section 28. Although depicted as a turbofan gas turbine engine in the disclosed non-limiting embodiment, it should be understood that the concepts described herein are not limited to turbofan engines and these teachings could extend to other types of engines, including but not limited to, three-spool engine architectures.

The gas turbine engine 20 generally includes a low speed spool 30 and a high speed spool 32 mounted for rotation about an engine centerline longitudinal axis A. The low speed spool 30 and the high speed spool 32 may be mounted relative to an engine static structure 33 via several bearing systems 31. It should be understood that other bearing systems 31 may alternatively or additionally be provided.

The low speed spool 30 generally includes an inner shaft 34 that interconnects a fan 36, a low pressure compressor 38 and a low pressure turbine 39. The inner shaft 34 can be connected to the fan 36 through a geared architecture 45 to drive the fan 36 at a lower speed than the low speed spool 30. The high speed spool 32 includes an outer shaft 35 that interconnects a high pressure compressor 37 and a high pressure turbine 40. In this embodiment, the inner shaft 34 and the outer shaft 35 are supported at various axial locations by bearing systems 31 positioned within the engine static structure 33.

A combustor 42 is arranged between the high pressure compressor 37 and the high pressure turbine 40. A mid-turbine frame 44 may be arranged generally between the high pressure turbine 40 and the low pressure turbine 39. The mid-turbine frame 44 can support one or more bearing systems 31 of the turbine section 28. The mid-turbine frame 44 may include one or more airfoils 46 that extend within the core flow path C.

The inner shaft 34 and the outer shaft 35 are concentric and rotate via the bearing systems 31 about the engine centerline longitudinal axis A, which is colinear with their longitudinal axes. The core airflow is compressed by the low pressure compressor 38 and the high pressure compressor 37, is mixed with fuel and burned in the combustor 42, and is then expanded over the high pressure turbine 40 and the low pressure turbine 39. The high pressure turbine 40 and the low pressure turbine 39 rotationally drive the respective high speed spool 32 and the low speed spool 30 in response to the expansion.

The pressure ratio of the low pressure turbine 39 can be pressure measured prior to the inlet of the low pressure turbine 39 as related to the pressure at the outlet of the low pressure turbine 39 and prior to an exhaust nozzle of the gas turbine engine 20. In one non-limiting embodiment, the bypass ratio of the gas turbine engine 20 is greater than about ten (10:1), the fan diameter is significantly larger than that of the low pressure compressor 38, and the low pressure turbine 39 has a pressure ratio that is greater than about five (5:1). It should be understood, however, that the above parameters are only exemplary of one embodiment of a geared architecture engine and that the present disclosure is applicable to other gas turbine engines, including direct drive turbofans.

In this embodiment of the exemplary gas turbine engine 20, a significant amount of thrust is provided by the bypass flow path B due to the high bypass ratio. The fan section 22 of the gas turbine engine 20 is designed for a particular flight condition--typically cruise at about 0.8 Mach and about 35,000 feet (10,668 m). This flight condition, with the gas turbine engine 20 at its best fuel consumption, is also known as bucket cruise Thrust Specific Fuel Consumption (TSFC). TSFC is an industry standard parameter of fuel consumption per unit of thrust.

Fan Pressure Ratio is the pressure ratio across a blade of the fan section 22 without the use of a Fan Exit Guide Vane system. The low Fan Pressure Ratio according to one non-limiting embodiment of the example gas turbine engine 20 is less than 1.45. Low Corrected Fan Tip Speed is the actual fan tip speed divided by an industry standard temperature correction of [(Tram °R) / (518.7 °R)]^{0.5} (where °R = K x ⁹/₅), where T represents the ambient temperature in degrees Rankine. The Low Corrected Fan Tip Speed according to one non-limiting embodiment of the example gas turbine engine 20 is less than about 1150 fps (351 m/s).

Each of the compressor section 24 and the turbine section 28 may include alternating rows of rotor assemblies and vane assemblies (shown schematically) that carry airfoils that extend into the core flow path C. For example, the rotor assemblies can carry a plurality of rotating blades 25, while each vane assembly can carry a plurality of vanes 27 that extend into the core flow path C. The blades 25 create or extract energy (in the form of pressure) from the core airflow that is communicated through the gas turbine engine 20 along the core flow path C. The vanes 27 direct the core airflow to the blades 25 to either add or extract energy.

This disclosure relates to blade outer air seals (BOAS) that can be positioned to surround a blade tip of each blade 25 in order to seal between the blades 25 and the engine static structure 33. The exemplary BOAS described herein provide secondary air sealing and heat shielding during all engine operating conditions, including engine shutdown.

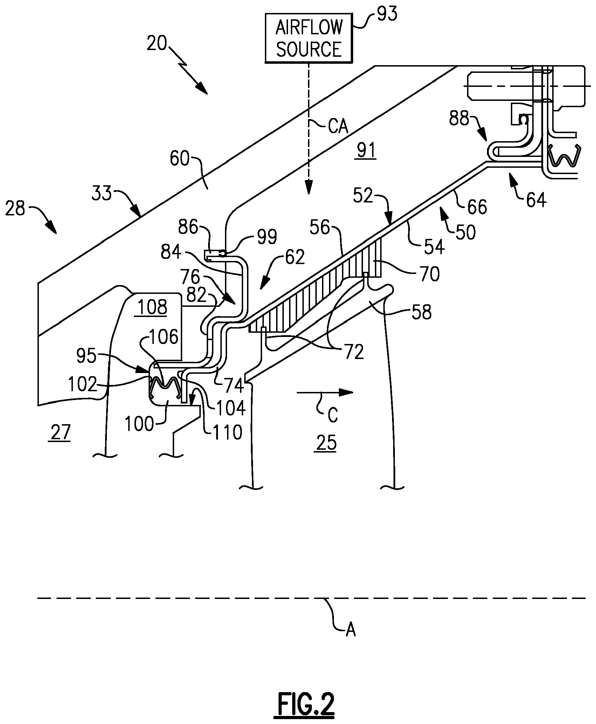

Figure 2 illustrates one exemplary embodiment of a BOAS 50 that may be incorporated into a gas turbine engine, such as the gas turbine engine 20. The BOAS 50 of this exemplary embodiment is a segmented BOAS that can be positioned and assembled relative to a multitude of additional BOAS segments to form a full ring hoop assembly that circumscribes the rotating blades 25 of either the compressor section 24 or the turbine section 28 of the gas turbine engine 20. The BOAS 50 can be circumferentially disposed about the engine centerline longitudinal axis A. It should be understood that the BOAS 50 could embody other designs and configurations within the scope of this disclosure.

The BOAS 50 includes a seal body 52 having a radially inner face 54 and a radially outer face 56. The seal body 52 axially extends between a leading edge portion 62 and a trailing edge portion 64, and circumferentially extends between a first mate face 66 and a second mate face (not shown) opposite from the first mate face 66. The BOAS 50 may be constructed from any suitable sheet metal. Other materials, including but not limited to high temperature metallic alloys, are also contemplated as within the scope of this disclosure.

A seal 70 can be secured to the radially inner face 54 of the seal body 52. The seal 70 may be brazed or welded to the radially inner face 54, or could be attached using other techniques. In one exemplary embodiment, the seal 70 is a honeycomb seal that interacts with a blade tip 58 of a blade 25 to reduce airflow leakage around the blade tip 58. A thermal barrier coating can also be applied to at least a portion of the radially inner face 54 and/or the seal 70 to protect the underlying substrate of the BOAS 50 from thermal fatigue and to enable higher operating temperatures. Any suitable thermal barrier coating could be applied to any portion of the BOAS 50.

The BOAS 50 is mounted radially inward from a casing 60 of the engine static structure 33. The casing 60 may be an outer engine casing of the gas turbine engine 20. In this exemplary embodiment, the BOAS 50 is mounted within the turbine section 28 of the gas turbine engine 20. However, it should be understood that other portions of the gas turbine engine 20 could benefit from the teachings of this disclosure, including but not limited to, the compressor section 24.

In this exemplary embodiment, a blade 25 (only one shown, although multiple blades could be circumferentially disposed within the gas turbine engine 20) is mounted for rotation relative to the casing 60 of the engine static structure 33. In the turbine section 28, the blade 25 rotates to extract energy from the hot combustion gases that are communicated through the gas turbine engine 20 along the core flow path C. A vane 27 is also supported within the casing 60 adjacent to the blade 25. The vane 27 (additional vanes could circumferentially disposed about the engine longitudinal centerline axis A as part of a vane assembly) prepares the core airflow for the blade(s) 25. Additional rows of vanes could also be disposed downstream from the blade 25, although not shown in this embodiment.

The blade 25 includes a blade tip 58 at a radially outermost portion of the blade 25. In this exemplary embodiment, the blade tip 58 includes at least one knife edge 72 that radially extends toward the BOAS 50. The BOAS 50 establishes a radial flow path boundary of the core flow path C. The knife edge(s) 72 and the BOAS 50 cooperate to limit airflow leakage around the blade tip 58. The radially inner face 54 of the BOAS faces toward the blade tip 58 of the blade 25 (i.e., the radially inner face 54 is positioned on the core flow path C side) and the radially outer face 56 faces toward the casing 60 (i.e., the radially outer face 56 is positioned on a non-core flow path side

The BOAS 50 may be disposed in an annulus radially between the casing 60 and the blade tip 58. Although this particular embodiment is illustrated in cross-section, the BOAS 50 may be attached at its mate face 66 (and at its opposite mate face) to additional BOAS segments to circumscribe associated blades 25 of the compressor section 24 and/or the turbine section 28. A cavity 91 radially extends between the casing 60 and the radially outer face 56 of the BOAS 50. The cavity 91 can receive a dedicated cooling airflow CA from an airflow source 93, such as bleed airflow from the compressor section 24, which can be used to cool the BOAS 50.

The leading edge portion 62 and the trailing edge portion 64 may include retention flanges 76, 88, respectively, for retaining the BOAS 50 to the casing 60. Although the retention flange 76 is shown positioned at the leading edge portion 62 and the retention flange 88 is shown positioned at the trailing edge portion 64, an opposite configuration outside of the scope of the present invention is also contemplated in which the retention flange 76 is positioned at the trailing edge portion 64 and the retention flange 88 is positioned at the leading edge portion 62. One or both of the retention flanges 76, 88 may incorporate secondary air sealing features, as discussed in greater detail below.

In this exemplary embodiment, the leading edge portion 62 of the BOAS 50 includes a seal land 74 in addition to the retention flange 76. The seal land 74 and the retention flange 76 can extend from the seal body 52. In this embodiment, the seal land 74 is formed integrally with the seal body 52 as a monolithic piece and the retention flange 76 can be attached to the seal body 52, such as by brazing or welding. Alternatively, the retention flange 76 could also be formed integrally with the seal body 52 as a monolithic piece. The seal land 74 seals (relative to a vane 27) the gas turbine engine 20 and also radially supports the retention flange 76. The retention flange 76 secures the BOAS 50 relative to the casing 60 to retain the vane 27 in the radial direction.

The retention flange 76 may include a radially inner portion 82 and a radially outer portion 84. The radially outer portion 84 is engaged relative to the engine static structure 33 and the radially inner portion 82 is engaged relative to a vane 27. In this exemplary embodiment, the radially inner portion 82 is generally L-shaped and the radially outer portion 84 is generally C-shaped.

The radially outer portion 84 of the retention flange 76 is received within a groove 86 of the casing 60 to radially retain the BOAS 50 to the casing 60 at the leading edge portion 62. The radially inner portion 82 of the retention flange 76 can be received within a groove 95 of a vane segment 108 of the vane 27 to radially support the vane 27. In this exemplary embodiment, the vane segment 108 is a vane platform and the groove 95 is positioned on the aft, radially outer diameter side of the vane 27. The vane segment 108 rests against the radially inner portion 82.

The seal land 74 radially supports the retention flange 76. In other words, the retention flange 76 contacts the seal land 74 such that the vane 27 is prevented from creeping inboard a distance that would otherwise permit the vane segment 108 from being liberated from the casing 60.

The seal land 74 extends radially inwardly from the radially inner face 54 of the BOAS 50 and can contact a portion 110 of the vane segment 108 such that a pocket 100 extends between an aft wall 102 of the vane segment 108 and an upstream wall 104 of the seal land 74. A seal 106 can be received within the pocket 100 between the aft wall 102 and the upstream wall 104.

In this exemplary embodiment, the seal 106 is a W-seal. However, other seals are also contemplated as within the scope of this disclosure, including but not limited to, sheet metal seals, C-seals, and wire rope seals. The seal 106 provides secondary air sealing by substantially preventing airflow from leaking out of the cavity 91 into the core flow path C (and vice versa). The seal land 74 also acts as a heat shield by blocking hot combustion gases that may otherwise escape the core flow path C and radiate into the vane segment 108 or other portions of the vane 27.

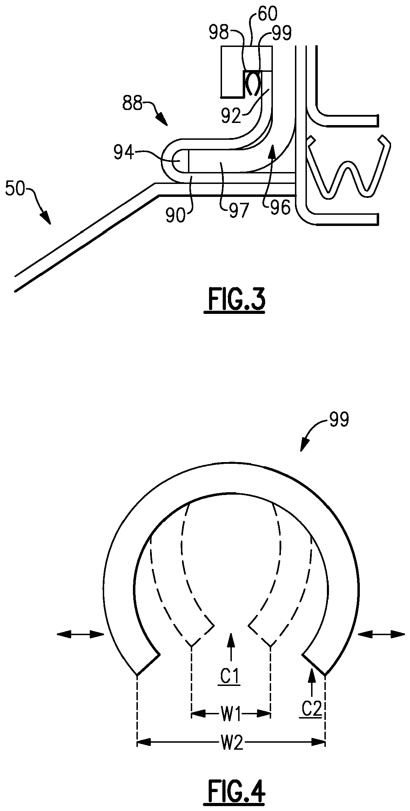

Referring to Figure 3 (with continued reference to Figure 2), the retention flange 88 of the BOAS 50 includes a fishmouth body 90 and an outer lip 92 that extends radially outward from the fishmouth body 90. The retention flange 88 is attached to the seal body 52 of the BOAS 50. Alternatively, the retention flange 88 is part of the seal body 52 to define a monolithic piece. The fishmouth body 90 defines a recess 94 that can receive a portion of the casing 60, such as a flange 96. In this embodiment, the flange 96 includes a bent portion 97 that extends into the recess 94 defined by the fishmouth body 90. The outer lip 92 extends into a groove 98 formed in the casing 60.

A seal 99 can be positioned within the groove 98 to bias the outer lip 92 against the flange 96. Another seal 99 could also be positioned within the groove 86 (see Figure 2) to seal around the retention flange 76. The seal 99 may exert a constant load on the outer lip 92 to force it against the flange 96 at all times, although some relative motion may exist between the outer lip 92 and the flange 96. In one embodiment, the seal 99 is attached to the outer lip 92, such as by brazing or welding, and is compression fit inside of the groove 98. The seal 99 can also be appropriately sized to provide adequate spring force to overcome any adverse pressure differential between the cavity 91 and the core flow path C. The seal 99 provides secondary air sealing by substantially preventing airflow from the cavity 91 from leaking around the retention flange 88 and escaping into the core flow path C (or vice versa).

Figure 4 illustrates the exemplary seal 99 of the BOAS 50. In one embodiment, the seal 99 is a C-seal and can be made from sheet metal. However, seals embodying different shapes and made from different materials are also contemplated. The seal 99 is expandable between a compressed configuration C1 having a first axial width W1 and an expanded configuration C2 having a second, greater axial width W2. The expanded configuration C2 is representative of a configuration of the seal 99 outside of the groove 98 (see Figure 3). The compression displacement range of the seal 99 (i.e., the difference between the first axial width W1 and the second axial width W2) is design specific and can be dependent on thermal expansion, friction and the forces necessary to bias the outer lip 92 toward the flange 96, among other parameters.

Although the different non-limiting embodiments are illustrated as having specific components, the embodiments of this disclosure are not limited to those particular combinations. It is possible to use some of the components or features from any of the non-limiting embodiments in combination with features or components from any of the other non-limiting embodiments.

It should be understood that like reference numerals identify corresponding or similar elements throughout the several drawings. It should also be understood that although a particular component arrangement is disclosed and illustrated in these exemplary embodiments, other arrangements could also benefit from the teachings of this disclosure.

The foregoing description shall be interpreted as illustrative and not in any limiting sense. A worker of ordinary skill in the art would recognize that various modifications could come within the scope of this disclosure. For these reasons, the following claims should be studied to determine the true scope and content of this disclosure.

## Claims

1. A gas turbine engine (20) comprising:
a blade outer air seal (BOAS) (50) comprising:
a seal body (52) having a radially inner face (54) and a radially outer face (56) that axially extend between a leading edge portion (62) and a trailing edge portion (64);
a retention flange (88) that extends from said seal body (52) at said trailing edge portion (64); and
a seal (99) that contacts said retention flange (88); and
a casing (60) that surrounds said BOAS (50);
**characterised in that**:
said retention flange (88) is biased against a flange (96) of said casing (60), said retention flange (88) includes a fishmouth body (90) and an outer lip (92) that extends radially outward from said fishmouth body (90), a groove (98) is formed in said casing (60), and said seal (99) is positioned within said groove (98) to bias the outer lip (92) against the flange (96).

2. The gas turbine engine (20) as recited in claim 1, wherein said seal (99) is attached to said outer lip (92).

3. The gas turbine engine (20) as recited in any preceding claim, wherein said seal (99) is a C-seal.

4. The gas turbine engine (20) as recited in any preceding claim, wherein said seal (99) is expandable between a compressed configuration (C1) and an expanded configuration (C2).

5. The gas turbine engine (20) as recited in any preceding claim, wherein said seal (99) applies a constant load on said retention flange (88).

6. The gas turbine engine (20) as recited in any preceding claim, further comprising:
a compressor section (24);
a combustor section (26) in fluid communication with said compressor section (24);
a turbine section (28) in fluid communication with said combustor section (26);
wherein the blade outer air seal (BOAS) (50) is associated with at least one of said compressor section (24) and said turbine section (28).

7. A method of sealing a gas turbine engine (20), comprising mounting a blade outer air seal (BOAS) (50) relative to a casing (60) of the gas turbine engine (20); the method further comprises biasing a retention flange (76,88) of the BOAS (50) against a flange (96) of the casing (60), **characterised in that** said retention flange (88) includes a fishmouth body (90) and an outer lip (92) that extends radially outward from said fishmouth body (90), the step of biasing includes inserting a seal (99) within a groove (98) of the casing to bias the outer lip (92) against the flange (96).

8. The method as recited in claim 7, wherein the seal (99) blocks airflow leakage around the retention flange (88).

9. The method as recited in claim 7 or 8, comprising the step of exerting a constant load on an outer lip (92) of the retention flange (88) during the step of biasing.

10. The method as recited in claim 7, 8 or 9, wherein the step of mounting includes inserting a portion of the flange (96) of the casing (60) into a recess defined by the fishmouth body (90) of the retention flange (88).

## Patentansprüche

1. Gasturbinentriebwerk (20), umfassend:
eine Außendichtung für eine Turbinenschaufel (blade outer air seal - BOAS) (50), umfassend:
einen Dichtungskörper (52), der eine radiale Innenfläche (54) und eine radiale Außenfläche (56) aufweist, die sich axial zwischen einem Vorderkantenabschnitt (62) und einem Hinterkantenabschnitt (64) erstrecken;
einen Rückhalteflansch (88), der sich von dem Dichtungskörper (52) an dem Hinterkantenabschnitt (64) erstreckt; und
eine Dichtung (99), die den Rückhalteflansch (88) berührt; und
ein Gehäuse (60), das die BOAS (50) umgibt;
**dadurch gekennzeichnet, dass**:
der Rückhalteflansch (88) gegen einen Flansch (96) des Gehäuses (60) vorgespannt ist, wobei der Rückhalteflansch (88) einen Fischmaulkörper (90) und eine äußere Lippe (92) beinhaltet, die sich von dem Fischmaulkörper (90) radial nach außen erstreckt, wobei eine Nut (98) in dem Gehäuse (60) gebildet ist und die Dichtung (99) in der Nut (98) positioniert ist, um die äußere Lippe (92) gegen den Flansch (96) vorzuspannen.

2. Gasturbinentriebwerk (20) nach Anspruch 1, wobei die Dichtung (99) an der äußeren Lippe (92) angebracht ist.

3. Gasturbinentriebwerk (20) nach einem der vorangehenden Ansprüche, wobei die Dichtung (99) eine C-Dichtung ist.

4. Gasturbinentriebwerk (20) nach einem der vorangehenden Ansprüche, wobei die Dichtung (99) zwischen einer zusammengedrückten Konfiguration (C1) und einer ausgedehnten Konfiguration (C2) ausgedehnt werden kann.

5. Gasturbinentriebwerk (20) nach einem der vorangehenden Ansprüche, wobei die Dichtung (99) eine konstante Last auf den Rückhalteflansch (88) ausübt.

6. Gasturbinentriebwerk (20) nach einem der vorangehenden Ansprüche, ferner umfassend:
einen Verdichterteil (24);
einen Brennkammerteil (26) in Fluidkommunikation mit dem Verdichterteil (24);
einen Turbinenteil (28) in Fluidkommunikation mit dem Brennkammerteil (26);
wobei die Außendichtung für eine Turbinenschaufel (blade outer air seal - BOAS) (50) zumindest einem von dem Verdichterteil (24) und dem Turbinenteil (28) zugeordnet ist.

7. Verfahren zum Abdichten eines Gasturbinentriebwerks (20), umfassend Montieren einer Außendichtung für eine Turbinenschaufel (blade outer air seal - BOAS) (50) bezogen auf ein Gehäuse (60) des Gasturbinentriebwerks (20);
wobei das Verfahren ferner Vorspannen eines Rückhalteflansches (76, 88) der BOAS (50) gegen einen Flansch (96) des Gehäuses (60) umfasst, **dadurch gekennzeichnet, dass**
der Rückhalteflansch (88) einen Fischmundkörper (90) und eine äußere Lippe (92) beinhaltet, die sich von dem Fischmundkörper (90) radial nach außen erstreckt, wobei der Schritt des Vorspannens Einsetzen einer Dichtung (99) in eine Nut (98) des Gehäuses umfasst, um die äußere Lippe (92) gegen den Flansch (96) vorzuspannen.

8. Verfahren nach Anspruch 7, wobei die Dichtung (99) eine Luftstromleckage um den Rückhalteflansch (88) hemmt.

9. Verfahren nach Anspruch 7 oder 8, umfassend den Schritt des Ausübens einer konstanten Last auf eine äußere Lippe (92) des Rückhalteflansches (88) während des Schritts des Vorspannens.

10. Verfahren nach Anspruch 7, 8 oder 9, wobei der Schritt des Montierens Einsetzen eines Abschnitts des Flansches (96) des Gehäuses (60) in eine Aussparung umfasst, die durch den Fischmundkörper (90) des Rückhalteflansches (88) definiert ist.

## Revendications

1. Moteur à turbine à gaz (20) comprenant :
un joint étanche à l'air extérieur de pale (BOAS) (50) comprenant :
un corps de joint (52) ayant une face radialement intérieure (54) et une face radialement extérieure (56) qui s'étendent axialement entre une partie bord d'attaque (62) et une partie bord de fuite (64) ;
une collerette de retenue (88) qui s'étend depuis ledit corps de joint (52) au niveau de ladite partie bord de fuite (64) ; et
un joint (99) qui vient en contact avec ladite collerette de retenue (88) ; et
un carter (60) qui entoure ledit BOAS (50) ;
**caractérisé en ce que** :
ladite collerette de retenue (88) est sollicitée contre une collerette (96) dudit carter (60), ladite collerette de retenue (88) inclut un corps en gueule de poisson (90) et un rebord extérieur (92) qui s'étend radialement vers l'extérieur depuis ledit corps en gueule de poisson (90), une rainure (98) est formée dans ledit carter (60), et ledit joint (99) est positionné à l'intérieur de ladite rainure (98) afin de solliciter le rebord extérieur (92) contre la collerette (96).

2. Moteur à turbine à gaz (20) selon la revendication 1, dans lequel ledit joint (99) est fixé sur ledit rebord extérieur (92) .

3. Moteur à turbine à gaz (20) selon une quelconque revendication précédente, dans lequel ledit joint (99) est un joint en C.

4. Moteur à turbine à gaz (20) selon une quelconque revendication précédente, dans lequel ledit joint (99) peut se déployer d'une configuration comprimée (C1) à une configuration déployée (C2).

5. Moteur à turbine à gaz (20) selon une quelconque revendication précédente, dans lequel ledit joint (99) applique une charge constante sur ladite collerette de retenue (88) .

6. Moteur à turbine à gaz (20) selon une quelconque revendication précédente, comprenant en outre :
une section compresseur (24) ;
une section chambre de combustion (26) en communication fluidique avec ladite section compresseur (24) ;
une section turbine (28) en communication fluidique avec ladite section chambre de combustion (26) ;
dans lequel le joint étanche à l'air extérieur de pale (BOAS) (50) est associé à au moins l'une de ladite section compresseur (24) et de ladite section turbine (28).

7. Procédé pour étanchéifier un moteur à turbine à gaz (20), comprenant le montage d'un joint étanche à l'air extérieur de pale (BOAS) (50) par rapport à un carter (60) du moteur à turbine à gaz (20) ;
le procédé comprend en outre la sollicitation d'une collerette de retenue (76, 88) du BOAS (50) contre une collerette (96) du carter (60), **caractérisé en ce que** ladite collerette de rétention (88) inclut un corps en gueule de poisson (90) et un rebord extérieur (92) qui s'étend radialement vers l'extérieur depuis ledit corps en gueule de poisson (90), l'étape de sollicitation inclut l'insertion d'un joint (99) à l'intérieur d'une rainure (98) du carter afin de solliciter le rebord extérieur (92) contre la collerette (96).

8. Procédé selon la revendication 7, dans lequel le joint (99) bloque les écoulements d'air autour de la collerette de retenue (88).

9. Procédé selon la revendication 7 ou 8, comprenant l'étape consistant à exercer une charge constante sur un rebord extérieur (92) de la collerette de retenue (88) lors de l'étape de sollicitation.

10. Procédé selon la revendication 7, 8 ou 9, dans lequel l'étape du montage inclut l'insertion d'une partie de la collerette (96) du carter (60) dans un évidement défini par le corps en gueule de poisson (90) de la collerette de retenue (88) .
